# EUROPEAN PATENT APPLICATION

(11) **EP 0 753 485 A1**
(43) Date of publication of application: **15.01.1997**
(21) Application number: 95304803.0
(22) Date of filing: 10.07.1995
(51) Int. Cl.: C01B 39/02, C01B 39/04, C01B 39/40, C01B 39/30, B01J 29/40, B01J 29/50

(54) **Zeolites and processes for their manufacture**

(71) Applicant: EXXON CHEMICAL PATENTS INC., Linden New Jersey 07036 (US)
(72) Inventor: Verduijn, Johannes Petrus,, B-3061 Leefdaal (BE)
(74) Representative: Darby, David Thomas

(57) **Abstract**

Colloidal zeolite seed crystals accelerate crystallization from a zeolite synthesis mixture.

## Description

This invention relates to zeolites, to processes for their manufacture, and to their uses as catalysts and adsorbents.

Zeolites have many uses in the field of organic chemistry, in particular as catalysts, catalyst carriers and absorbents, for example in separation processes. As the scale on which they are used increases so does the need for an improvement in the processes for their manufacture.

In WO 93/08124, a process for the manufacture of MFI zeolites of improved particle size uniformity and closer particle size distribution is described, which employs colloidal, i.e., particle size less than 100 nm, silicalite crystals as seeds in the synthesis mixture. The disclosure of this International application is incorporated herein by reference.

It has now surprisingly been found that the presence of nanometric seed crystals in the zeolite synthesis mixture not only improves the quality of the crystallites produced but also accelerates their formation. This is commercially of great significance since at present the crystallization involves treatment at elevated temperatures for several days or even weeks.

Accordingly, the present invention provides the use of zeolite seed crystals of particle size at most 100 nm to accelerate zeolite crystallization during hydrothermal treatment of a zeolite synthesis mixture.

The invention further provides a process for the manufacture of a zeolite which comprises the thermal treatment of a zeolite synthesis mixture containing zeolite seed crystals of particle size at most 100 nm, the thermal treatment being carried out at a temperature sufficient to effect zeolite crystallization, the treatment time being at most 24 hours.

Advantageously the thermal treatment lasts at most 12 hours, preferably at most 6 hours, and most preferably for at most 2 hours.

To be effective in accelerating zeolite crystallization, a very small proportion by weight of seed crystals suffices; advantageously a proportion of seeds, based on the weight of synthesis mixture, of at most 0.1 wt%, is used, more advantageously a proportion within the range of 0.005% to 0.075%, and preferably 0.015% to 0.05%.

The greater the concentration of seeds, the greater the acceleration; similarly for a given weight of seeds, the smaller the seeds the greater the acceleration. The proportion of seed crystals influences the particle size of the product, thus enabling control of particle size. Any undesired effect on particle size may be corrected by variation in the temperature of the thermal treatment.

As a result of the low proportions used, the composition of the seed crystals is insignificant when calculating the composition of the product zeolite based on the components of the original synthesis mixture. Indeed, at least in the preparation of MFI-type zeolites, the seeds need not be of the same composition as the desired zeolite product. For example, colloidal silicalite may be used in the manufacture of ZSM-5. The uniform distribution of the colloidal seed crystals throughout the synthesis mixture facilitates the formation of a product of controlled particle size and narrow particle size distribution.

In GB-A-2245550, there is described the acceleration of mordenite formation by seeding a synthesis mixture; in this application, however, the seed crystal size is unspecified, and the proportion of seeds is from 0.1 to 3% by weight of the synthesis mixture, a level of 2% being given as optimum.

According to the present invention, the molar composition of the synthesis mixture is chosen to produce a zeolite of the desired structure and molar or atomic proportions, as is the structure directing agent or template when desired or required, in the same way as in the corresponding known unseeded procedures.

In the case of ZSM-5 preparation, crystallization is accelerated most effectively, however, when the alkalinity of the synthesis mixture is low, especially at a molar ratio of OH⁻/SiO₂ within the range of from 0.025 to 0.15.

For the manufacture of an MFI type zeolite, especially ZSM-5, the synthesis mixture is advantageously of the molar composition, calculated in terms of oxides, within the ranges:

| | |
|---|---|
| M₂O:SiO₂ | 0.02 to 0.20:1 |
| SiO₂:Al₂O₃ | at least 20:1 |
| (TPA)₂O:SiO₂ | 0.01 to 0.045:1 |
| H₂O:SiO₂ | 10 to 50:1 |

wherein TPA represents tetrapropylammonium and M represents sodium or potassium.

For the manufacture of Offretite, the molar composition, calculated in terms of oxides, is advantageously within the ranges:

| | |
|---|---|
| M₂O:Al₂O₃ | 1.3 to 4.0:1 |
| (TMA)₂O:Al₂O₃ | 0.2 to 0.6:1 |
| SiO₂:Al₂O₃ | 7 to 13:1 |
| H₂O:Al₂O₃ | 50 to 540:1 |

wherein TMA represents tetramethylammonium and M represents potassium, of which up to 30 molar per cent may be replaced by sodium.

The zeolite produced by the process of the invention is primarily an aluminosilicate, and will be described herein as such. It is, however, within the scope of the invention to replace aluminium wholly, though preferably only partly, with gallium, and partly with boron, iron or other trivalent elements, and silicon may similarly be replaced by germanium or phosphorus. It is also within the scope of the invention to include inorganic cations other than potassium or sodium in the synthesis mixture.

The sources of the various elements required in the final product may be any of those in commercial use or described in the literature, as may the preparation of the synthesis mixture.

For example, the source of silicon may be, for example, silica powder, a silicate, e.g., an alkali metal silicate, a tetraalkyl orthosilicate, or an aqueous colloidal suspension of silica, for example one sold by E.I. du Pont de Nemours under the trade name Ludox. Ludox HS-40 is a sodium-containing product, while AS-40 contains very little sodium.

The source of aluminium may be, for example, aluminium metal, e.g., in the form of chips, hydrated alumina, a water-soluble aluminium salt, e.g., aluminium sulphate, or an alkoxide, e.g., aluminium isopropoxide.

The alkali metal ion source is advantageously sodium or potassium hydroxide.

The organic structure directing agent may be, for example, the hydroxide or a salt of the tetramethylammonium (TMA), tetraethylammonium (TEA), tetrabutylammonium (TBA), tetrapropylammonium (TPA) or substituted pyrrolidinium, pyridinium or piperidinium cation.

The seeds are conveniently prepared as described in WO 93/08125; advantageously their particle size is within the range 25 to 90 nm, preferably 30 to 75 nm.

The synthesis mixture is conveniently prepared by dissolving the aluminium source and alkali metal source in water, adding the silica source containing any template, adding the seed crystals, heating to boiling, cooling, and correcting for water loss such that the required molar proportions result.

Heat treatment is advantageously carried out at a temperature within the range of from 100°C to 200°C, preferably from 120° to 180°C and conveniently at about 140° to 175°C. Treatment may be carried out statically or with moderate stirring.

The treatment may be carried out batchwise, for example, in an autoclave, or continuously, for example, in a heat-exchanger type, e.g., tubular, reactor.

The procedures described above yield zeolites in a form suitable, if desired after ion exchange and/or calcination, for use as catalysts for processes requiring non-acidic molecular sieves, e.g., especially those treating hydrocarbons, e.g., cracking, hydrocracking and de-waxing. The Na and K ZSM materials are especially useful for the above purposes. Zeolite Offretite is useful as a catalyst in numerous hydrocarbon conversions, especially useful also in aromatization, alkylation, and isomerization, is effective in hydrocarbon separations and adsorptions, and is useful as a catalyst base.

The invention further provides the zeolites produced by the process of the invention, either in particulate form or in the form of a layer on a support, especially in the form of a membrane.

The invention still further provides the use of the zeolites synthesized by the process of the invention as catalyst, catalyst supports or adsorption agents in organic reactions, if desired or required after cation exchange, washing or calcining.

The following Examples illustrate the invention:

### Example 1

Using NaOH pellets (Baker 0402), Al(OH)₃ powder, (Alcoa C-31), colloidal silica (Ludox HS-40), TPABr (Fluka 88105) and colloidal silicalite seeds of about 30 nm particle size, a synthesis mixture of molar composition
0.45Na₂O:0.45(TPA)₂O:0.169 Al₂O₃:10 SiO₂:147 H₂O
was prepared, containing 0.018% by weight of colloidal seeds of silicalite, particle size 30 µm, the latter prepared as described in WO 93/08125, the disclosure of which is incorporated by reference.

The mixture was formed by dissolving the sodium hydroxide and aluminium pellets in water by boiling until a clear solution resulted. After cooling to room temperature, water weight loss was corrected. The TPABr was dissolved in water and added to the colloidal silica to which had already been added the colloidal silicalite suspension. Finally, the aluminate solution was added and the mixture stirred for 5 minutes in a high-shear mixer to yield a just pourable jelly.

The synthesis mixture was divided between nine autoclaves which were placed in an oven at room temperature. The oven was heated smoothly to 150°C over 2 hours. One autoclave was removed immediately, and the remainder after having been maintained at 150°C for 0.5, 0.75, 1.00, 1.25, 1.50, 1.75, 2, and 4 hours. On removal, each autoclave were cooled rapidly to room temperature by cold running water.

The contents of each autoclave were repeatedly washed with water to a pH of about 10.5, the solid products being separated from the mother liquor and successive washwaters by centrifuging. The products were dried in an oven at 110°C for about 18 hours.

X-ray diffraction (XRD) and scanning electron microscopy (SEM) analysis of the products showed that crystallization of zeolite MFI had started by 1 hour, and by 1.75 hours the product was fully crystalline.

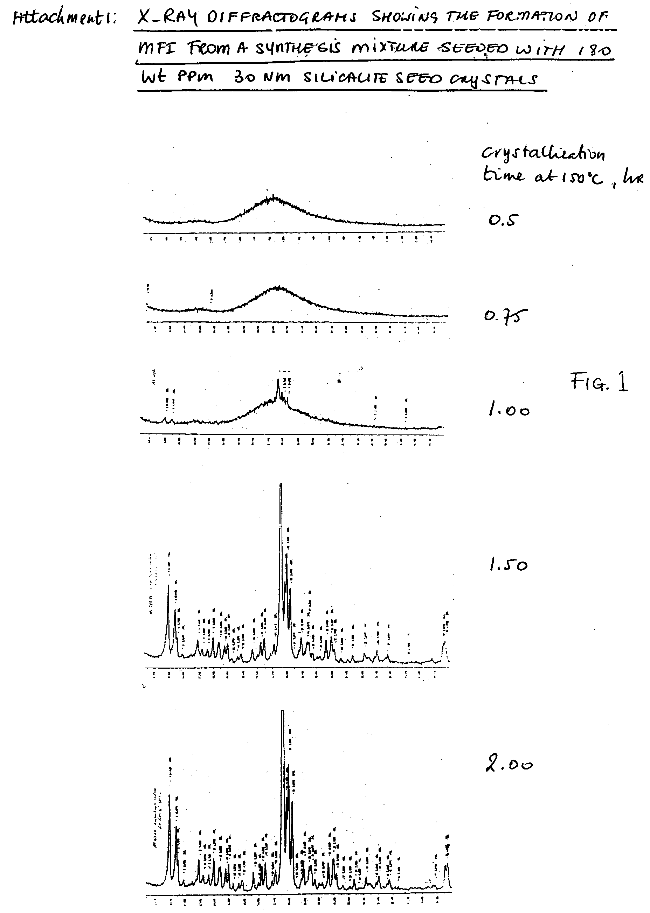

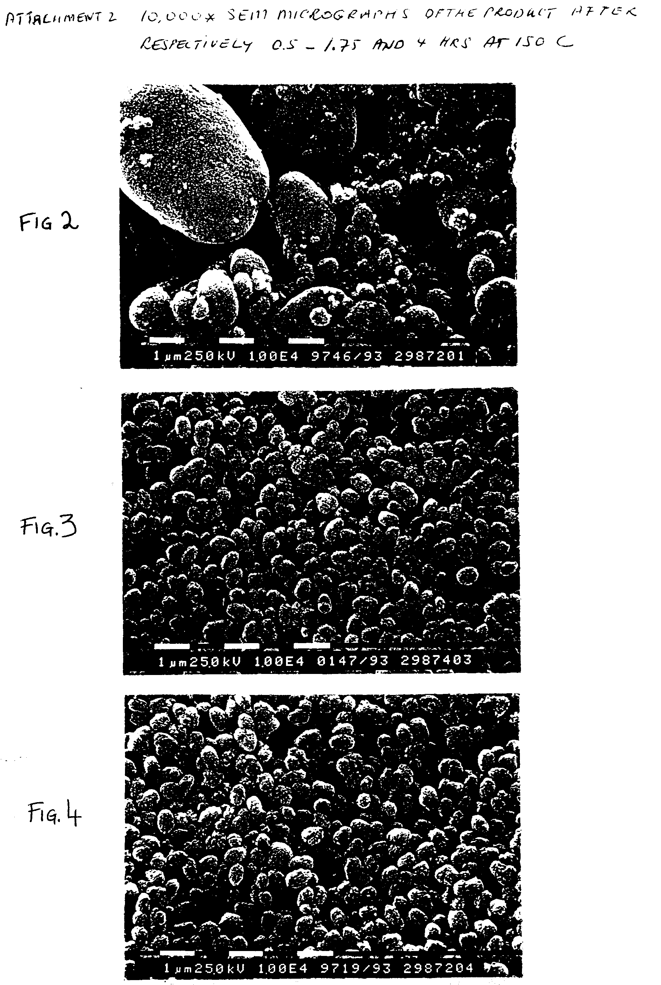

Fig. 1 shows the XRD of the products after 0.5, 0.75, 1.00, 1.50 and 2.00 hours at 150°C. Figs. 2 to 4 show SE micrographs of the products after 0.5, 1.75 and 4 hours respectively. They clearly show uniformly shaped and sized particles after 1.75 hours at 150°C, with no significant change after prolonged (4 hours) crystallization time.

For comparison purposes, an unseeded but otherwise identical synthesis mixture was divided over 6 autoclaves which were treated identically with the autoclaves containing the seeded mixtures, except that the times at 150°C were 8, 16, 24, 48, 72, and 96 hours. Characterization by XRD showed a fully crystalline product by 48 hours at 150°C.

### Example 2

Colloidal Offretite of particle size below 50 nm was prepared as follows from a synthesis mixture containing the following components:

| Parts by Weight | |
|---|---|
| TMAOH, 25% by weight in water (Fluka) | 108.52 |
| Al chips, 99.99% wt purity (Fluka) | 2.8924 |
| SiO₂ powder, 89.8% wt, 10.2% water (Baker) | 35.52 |
| (It is believed that a small proportion of KOH was present as contaminant in the TMAOH.) | |

The Al chips were dissolved in the TMAOH solution with stirring and gentle heat. After addition of the silica powder, the mixture was heated to boiling with stirring and kept at boiling point for 5 minutes. It was apparent that not all the silica had dissolved, some settling on the base of the glass beaker. The molar composition of the synthesis mixture was:
2.78 (TMA)₂O:0.47 K₂O:Al₂O₃:9.90 SiO₂:91H₂O

The synthesis mixture was homogenized by vigorous stirring for several minutes, then immediately poured into a plastic bottle which was placed in an oil bath, the open end of the bottle being connected to a reflux condenser. The oil bath was heated to 85°C, and maintained at that temperature over a period. The appearance of the mixture gradually changed, with the quantity of deposited silica reducing, while the mixture developed into a transparent jelly. Heating was terminated after 160 hours.

After washing using a 17500 rpm centrifuge, the product was suspended in the last wash water, a stable, colloidal, suspension resulting. A portion was evaporated to dryness and characterized by XRD and SEM. Although the diffractogram showed weak and broad peaks, the pattern was still recognizable as pure Offretite. The SEM showed that the product consisted of uniformly sized and shaped particles, about 45 nm x 20 nm. XRD analysis of a portion of product calcined in air at 475°C for 20 hours showed essentially no change in crystallinity, evidence of thermal stability.

A further synthesis mixture was prepared using the following components:

| | Parts by Weight |
|---|---|
| KOH pellets, 87.4% wt purity (Baker) | 39.40 |
| Al(OH)₃ powder, 98.5% wt purity (Alcoa) | 24.29 |
| H₂O, deionized | 286.55 |
| Ludox HS-40, 40% SiO₂ by weight in water (Du Pont) | 230.38 |
| TMACl, > 99% wt purity (Fluka) | 16.81 |
| Colloidal seed suspension, 5.36 wt% in water | 2.81 |

The potassium hydroxide and hydrated alumina were dissolved in 115 parts of water with boiling until a clear solution resulted. The TMACl was dissolved in 171.55 parts water and added to the colloidal silica. Next, the colloidal seeds were added to the resulting solution, and stirred for 3 minutes. The aluminate solution was then added and the resulting synthesis mixture stirred for 5 further minutes. Its molar composition was
2.00 K₂O:1.00 TMACl:Al₂O₃:10 SiO₂:160 H₂O
and it contained 0.025 wt% colloidal Offretite seeds.

For comparison purposes, a second Offretite synthesis mixture of identical molar proportions was prepared without seeds.

The seeded synthesis mixture was divided between four stainless steel autoclaves, and heated as described in Example 1, the autoclaves being removed after 1, 2, 3, and 4 hours after the oven reached 150°C, the removed autoclaves being rapidly cooled with cold running water.

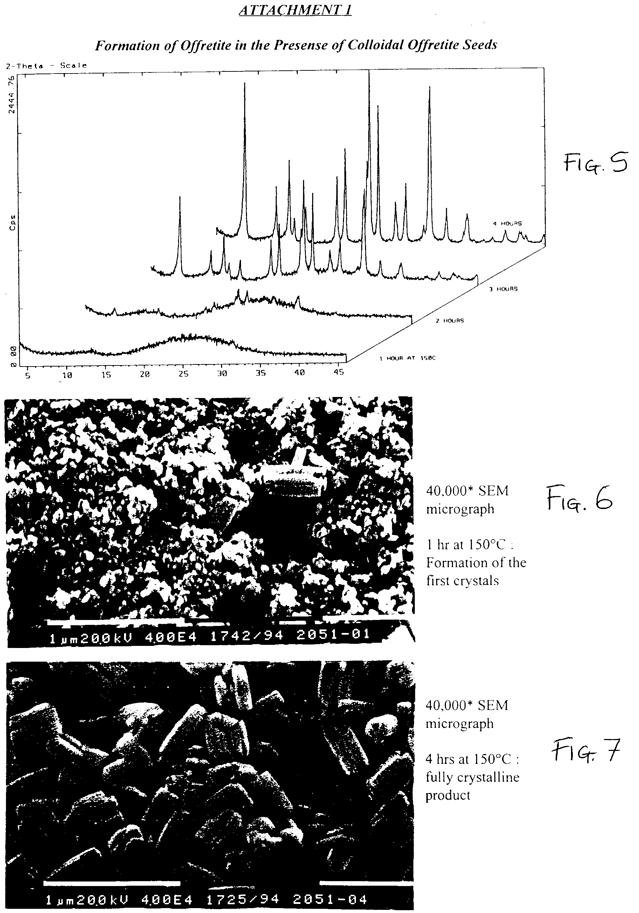

The products were repeatedly washed with water until the wash-water had a pH about 10, the product being separated by centrifuging, and dried at 110°C for about 16 hours. XRD and SEM analysis showed that crystallization had begun by 1 hour at 150°C, and the product is fully crystalline after 4 hours. Fig. 5 shows the XRD of the four products, while Figs. 6 and 7 show SEM's of the 1 hour (first crystal formation) and 4 hours (complete crystallization) products.

The unseeded mixture was divided between autoclaves which were heated for 4, 8, 16, 48 and 72 hours at 150°C under the same regime as the seeded mixture. Formation of crystals begins only at 16 hours, and the product is not fully crystalline until 48 hours of heating.

## Claims

1. The use of zeolite seed crystals of particle size at most 100 nm to accelerate zeolite crystallization during thermal treatment of a zeolite synthesis mixture.

2. A process for the manufacture of a zeolite which comprises the thermal treatment of a zeolite synthesis mixture containing zeolite seed crystals of particle size at most 100 nm, the thermal treatment being carried out at a temperature sufficient to effect zeolite crystallization, the treatment time being at most 24 hours.

3. A process as claimed in claim 2, wherein treatment is carried out for at most 12 hours.

4. A process as claimed in claim 2, wherein treatment is carried out for at most 6 hours.

5. The invention as claimed in any one of claims 1 to 4, wherein the synthesis mixture contains at most 0.1 wt% of seed crystals.

6. The invention as claimed in any one of claims 1 to 4, wherein the mixture contains from 0.01 to 0.075 wt% of seed crystals.

7. The invention as claimed in claim 6, wherein the seed crystals content is from 0.015 to 0.05%.

8. The invention as claimed in any one of claims 1 to 7, wherein an MFI-type zeolite is prepared.

9. The invention as claimed in any one of claims 1 to 7, wherein ZSM-5 is being prepared and silicalite seed crystals are used.

10. The invention as claimed in claim 8 or claim 9, wherein the synthesis mixture is of the molar composition, calculated in terms of oxides, within the ranges:
| | |
|---|---|
| M₂O:SiO₂ | 0.02 to 0.2:1 |
| SiO₂:Al₂O₃ | at least 20:1 |
| (TPA)₂O:SiO₂ | 0.01 to 0.045:1 |
| H₂O:SiO₂ | 10 to 50:1 |
wherein TPA represents tetrapropylammonium and M represents sodium or potassium.

11. The invention as claimed in any one of claims 1 to 7, wherein Offretite is prepared.

12. The invention as claimed in claim 11, wherein the synthesis mixture is of the molar composition, calculated in terms of oxides, within the ranges:
| | |
|---|---|
| M₂O:Al₂O₃ | 1.3 to 4.0:1 |
| (TMA)₂O:Al₂O₃ | 0.2 to 0.6:1 |
| SiO₂:Al₂O₃ | 7 to 13:1 |
| H₂O:Al₂O₃ | 50 to 540:1 |
wherein TMA represents tetramethylammonium and M represents potassium, of which up to 30 molar per cent may be replaced by sodium.

13. The product of the invention of any one of claims 1 to 12, either in particulate or layer form.

14. The use of the product claimed in claim 13, if desired or required after cation-exchange, calcination or washing, as a catalyst, catalyst support or adsorption agent in any organic reaction.

15. The use, in the manufacture of a zeolite by hydrothermal treatment of a zeolite synthesis mixture, of the concentration of colloidal zeolite seeds to control the particle size of the product.
